(19) **Europäisches Patentamt / European Patent Office / Office européen des brevets**

(11) **EP 2 033 463 B1**

(12) **EUROPEAN PATENT SPECIFICATION**

(45) Date of publication and mention
of the grant of the patent:
**15.09.2010   Bulletin 2010/37**

(21) Application number: **07733152.8**

(22) Date of filing: **08.06.2007**

(51) Int Cl.:
**H04W 4/10** *(2009.01)*

(86) International application number:
**PCT/GB2007/002142**

(87) International publication number:
**WO 2007/141552 (13.12.2007 Gazette 2007/50)**

(54) **REDUCING DELAYS IN PUSH TO TALK OVER CELLULAR SYSTEMS**

VERRINGERUNG VON VERZÖGERUNGEN IN PUSH-TO-TALK-OVER-CELLULAR-SYSTEMEN

RÉDUCTION DES DéLAIS DE COMMUNICATION TALKIE-WALKIE DANS DES SYSTÈMES CELLULAIRES

(84) Designated Contracting States:
**DE FR GB**

(30) Priority:   **09.06.2006   GB 0611454**

(43) Date of publication of application:
**11.03.2009   Bulletin 2009/11**

(73) Proprietor: **Panasonic Corporation
Kadoma-shi
Osaka 571-8501 (JP)**

(72) Inventors:
• **COOPER, David, Edward
Thatcham, Berkshire RG19 4ZB (GB)**

• **STACET, David, John
Thatcham, Berkshire RG19 4ZB (GB)**

(74) Representative: **Jennings, Michael John et al
A.A. Thornton & Co.
235 High Holborn
London, WC1V 7LE (GB)**

(56) References cited:
**EP-A- 1 505 844        EP-A- 1 523 200
EP-A1- 1 612 957       US-A1- 2003 153 341**

Printed by Jouve, 75001 PARIS (FR)

## Description

## Overview of the System

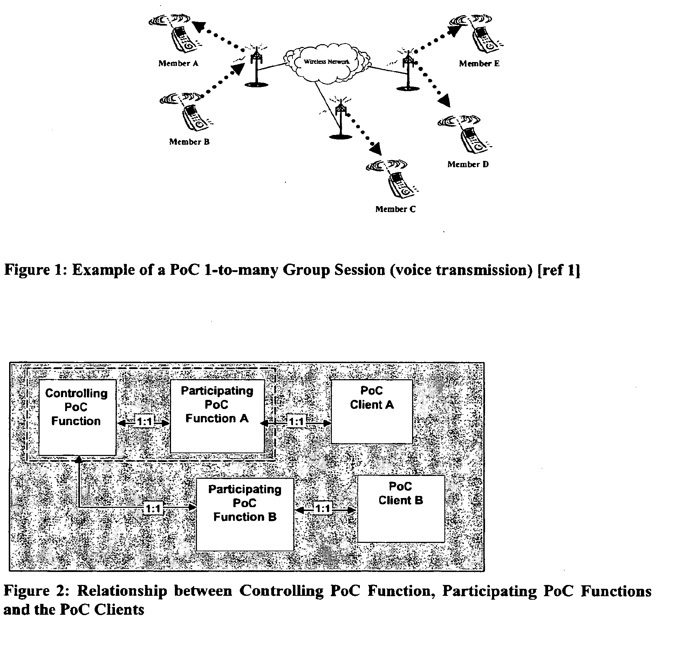

The OMA Open Market Alliance Push to talk over Cellular (PoC) system is intended to provide a walkie-talkie like function for users with cellular phones. PoC allows user voice and data communications between groups of recipients such as in Figure 1 "Example of a PoC 1-to-many Group session (voice transmission)" below.

In push to talk over cellular, the mobile handset is referred to as a PoC Client which communicates with 'PoC Servers' in the network. One of these servers performs a role called the 'PoC controlling function'; all PoC clients must request permission to speak (make a request for the 'floor' to be granted) from the PoC controlling function. Typically the user does this by pressing a button on the handset. When he gets permission to speak this is normally indicated by an audible 'talk' tone. When a user speaks, he transmits a "Talk Burst" or more generally a "Media Stream" which may contain audio, video or other information.

The system as currently implemented tends to suffer from a number of undesirable delays which degrade the user experience. This proposal is concerned with the minimization of all these delay factors in the context of the OMA PoC architecture.

## Overview of OMA PoC Architecture

Each user's handset is called a "PoC Client". The PoC session itself is controlled by a "Controlling PoC function" which performs management functions such as admission and determining which user is allowed the floor. PoC clients communicate with the PoC Controller via a "Participating PoC Function". If the PoC client belongs to the same network as the Controlling PoC function, then the Controlling and Participating PoC function may be one and the same entity. Otherwise they are different entities, and the participating PoC function resides in the same network as the PoC Client. This is illustrated in Figure 2 "Relationship between Controlling PoC Function, Participating PoC Functions and the PoC Clients".

Media and media-related signalling such as Talk Burst Control messages originate from the PoC Client that currently has the floor, is always routed through the controlling PoC function, and terminates at the other PoC Clients. For efficiency it may bypass the Participating PoC Functions.

Session control signalling (such as joining a session, leaving a session, setting up a session) is always routed via the Participating PoC function.

## System Delay Analysis

The speaker, having pressed the PTT button, experiences some apparent delay before the talk tone is generated (assuming that the request to speak is successful); this time is illustrated as $T_{floor}$ in the following figures. In general, the less delay that the speaker perceives the better.

Second, there is a perceptible delay from when the speaker pushes the PTT button until the listener first hears the speaker talking. It is important to minimize this delay to prevent 'clashes' which occur when the conversation appears to be paused but in fact one speaker has already asked for the floor. This delay is called $T_{ptt-play}$ in the following.

Also, once the speaker is talking, there is a delay from the voice of the speaker to the ear of the user ('end to end' delay). This delay comprises a number of factors, including but not limited to:

- Time to code the voice of the speaker into discrete digital voice frames or packets.
- Time to transmit a packet from speaker's handset to listener's handset.
- Decoding delay at listener's handset.

It is desirable to minimize end to end 'mouth to ear' delay.

In the OMA PoC system, the delay factors at present include the following:-

1. A user wishing to talk pushes a button, and a *talk_burst_request* message is sent from PoC Client to PoC controller requesting the floor.

2. A Message *talk_burst_confirm* comes from Controlling PoC function to PoC client granting the floor (assuming that request is successful). Also, a corresponding *receiveing_talk_burst* message is sent to all other PoC clients in the session to indicate that another user has gained the floor.

3. The PoC client indicates to the speaker that he has the floor (typically by playing an audible tone). Now he can start talking.

4. Speech is encoded into frames and transmitted from PoC Client to the other PoC listeners. Delay is variable, but suppose minimum delay is $T_{e2e}$.

5. Speech frames are buffered at the PoC listeners. To cope with the fact that the delay is variable from the minimum value, the PoC listening client must first collect a buffer of duration $T_{jit}$ where this should typically be long enough to ensure that 99% of frames are received in time to play them out.

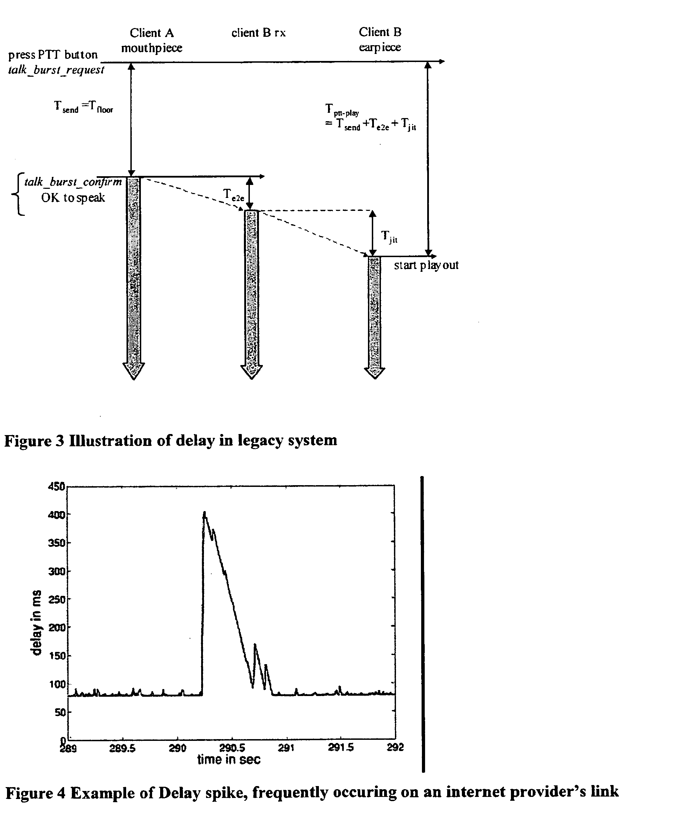

This is shown below in Figure 3 where the time delays are as follows:-

$T_{floor}$ : this is the delay from push button to an indication that the user is allowed to speak. Typically this is less than one second (Ref 2).

$T_{send}$ : this is the delay from push button to when the sending client is allowed to start transmitting speech frames towards the network. For legacy systems $T_{send} = T_{floor}$.

$T_{e2e}$ : this is the transmission delay across an IP network. Typically this is in the region of 50-250 ms (Ref 2, Ref 3).

$T_{jit}$: this is the transmission delay jitter or variation across an IP network. Depending on the network it can range up to 300ms (Ref 5).

Then the time from the speaker pressing the PTT button and the listener first being able to hear the speaker is:-

Then

$$T_{ptt\text{-}play} = T_{floor} + T_{e2e} + T_{jit}$$

**Delay Jitter Value**

The delay jitter $T_{jit}$. significant, and in this proposal a method will be shown that reduces the overall delay in playing out the voice or media from the value above by at least $T_{jit}$.

Ref 3 reports delay jitter values in the region of 50ms but which tends to increase with increasing end to end delay. In ref 4, the 90 percentile jitter over for video frames over the public internet is recorded as being as being as long as 1 sec (this work does not deal with speech frames). Ref 5 performs very comprehensive measurement on voice frame delay and delay jitter on Internet Backbones between cities in the USA. It reports in many cases low minimum delays (50ms) but with delay variation up to 300ms for a significant percentile of cases. It found the internet backbone links have delay jitter properties that tend to be a property of that link and can be classified as: high, alternating two state, periodic spikes, or consistently low. Ref 6 reports average figures 2 sec for $T_{talk}$, and 1.3 sec for inter voice delay.

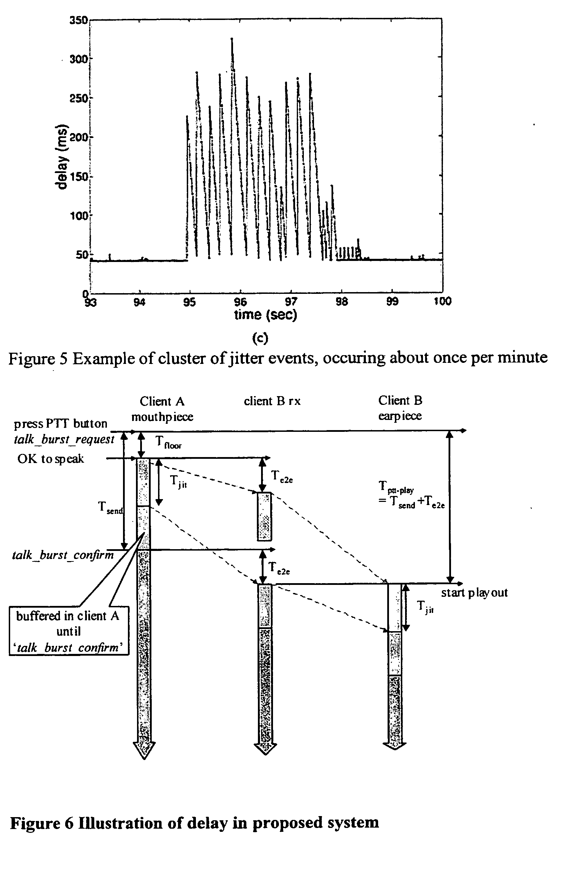

Figures 4 and 5 are taken from this study, showing an example of periodic spikes.

EP-A-1505844 discloses a method and apparatus for buffering the initial speech of an initial speaker in a push-to-talk call.

EP-A-1523200 discloses apparatus, and an associated method, for facilitating formation of an apparent push-to-talk communication session connection at a mobile station operable in a conventional cellular communication system.

EP-A-1612957 teaches the saving of the digital voice data in a memory that 'is performed at least in part during a delay time period between a user actuation of the push-to-talk switch and the identifying of a floor grant.

US 2003/153341 A1 teaches a method and apparatus for initiating a group call in a group communication network provides for receiving a request for initiating a group call based on a member and initiating the group call based on the received member list.

**Summary of the Invention**

The present invention provides a push-to-talk cellular communication method as described in claim 1. A corresponding system can be provided. Note that the right to 'talk' could mean in practice the right to speak or the right to send a media stream. The initial segment of speech or media will have a limited duration. Among other factors it will be limited by the size of the buffer in the client devices, but preferably it is limited in a more positive way, for example on the basis of measured values of the performance of the network, such as the delay jitter. This can be relayed to the client devices by a server.

The duration of the initially transmitted segment may be dependent on the delay jitter or other aspects of delay in the system.

The invention also provides a client device as described in claim 9.

**Brief Description of the Drawings**

Embodiments of the invention will now be described by way of example only and with reference to the accompanying drawings in which:

Figure 1. schematically illustrates a one-to-many push to talk group session;

Figure 2. illustrates the relationship between functions and clients as described above;

Figure 3. is a Turing diagram illustrating the delays present in a legacy push-to-talk system;

Figures 4 and 5 are graphs based on studies of delay in push-to-talk systems;

Figure 6 is a timing diagram similar to Figure 3 showing the improvement expected with the present invention;

Figure 7 is another timing diagram similar to Figures 3 and 6 showing an optical enhancement to the system of Figure 6.

**Detailed Description**

The invention relies on the introduction of a predictive grant mechanism, in which according to circumstances (for example there has been silence for a certain period), the 'floor granted' indication is indicated to the user prior to confirmation being received from the Controlling PoC Function. Thus $T_{floor} < T_{send}$. Figure 6 below indicates timing.

Then the user will be able to start talking before the PoC Client receives the *talk_burst_confirm* message that confirms he has the floor (therefore there is a slight risk that the user will be apparently granted the floor only to have it taken away). As shown in the figure below, the talking PoC client starts to send a media stream before confirmation is received. But it only sends the first segment of the media stream, with a duration of $T_{jit}$. After this it stores the media stream until it receives a confirmed floor granted indication.

Note that the PoC client is not expected to be aware of the prevailing value of the delay jitter. This can be notified to the client by the server. The time delay $T_{floor}$ before the client indicates to the user that he has the floor can also in principle be notified.

This first segment of the media stream is buffered in the PoC server until its transmission to the listening PoC client, where it may be buffered and used to initialize the media jitter buffer. Each frame of the media stream contains a binary flag called the "predictive/confirmed floor grant flag" which indicates that this frame was transmitted before confirmation of floor grant has been received by the talking PoC client (predictive floor grant) or after confirmation is received (confirmed floor grant) The frames comprising the first segment of the media stream are marked with a flag indicating that they are sent with "predictive floor grant", with the result that the PoC client does not play them out. This flag is a novel aspect of this proposal.

The speaking PoC client then buffers the media stream until it receives a confirmation of floor granted. At this time it starts to send the media stream towards the controlling PoC function which relays it towards the listening PoC clients.

Each frame in the media frame is now marked a flag indicating they are sent with "confirmed floor grant", with the result that the listening PoC client can start to play out the media stream as soon as it gets the first such frame, in the knowledge that the media stream data will from now on arrive continuously until it finally stops.

The advantage of this method is that the delay from the talker requesting the floor to the listeners hearing the start of the media stream is reduced. In addition, the floor grant delay perceived by the talker is reduced.

The extent of this reduction is as follows. As noted above, in the legacy system this delay is:-

$$T_{\text{ptt-play}} = T_{\text{floor}} + T_{\text{e2e}} + T_{\text{jit}}$$

In the new system the delay is:-

$$T_{\text{ptt-play}} = T_{\text{floor}} + T_{\text{e2e}}$$

As can be seen, the delay to fill the jitter buffer is eliminated.

For example, if floor grant delay is 500 ms, minimum end to end delay is 100ms, maximum jitter is 400ms, this equates to 40% improvement.

## Enhancement

An enhancement to the above solution is now described that utilises the Talk Burst Control messages to minimise the delay further. Talk Burst Control messages are used by the Controlling PoC server to control the granting of the floor. In normal operation, the Controlling PoC Server sends a *"Talk_Burst_Confirm"* message to the Client to inform the Client that it has been granted the floor; in parallel the Server sends a *"Receiving_Talk_Burst_from_User X"* message to all other to inform them that Client X has been granted the right to speak.

In this alternate solution the behaviour of the talking client (client A) is exactly as described above. However the behaviour of the receiving client is modified such that immediately upon receiving the "Receiving Talk Burst from User A" message it checks the size of its received buffer from User A. If it has received the initial $T_{jit}$ amount of data it is able to immediately proceed playing out this data rather than waiting for the subsequent data packets to arrive. Under normal conditions if we assume that the "Receiving Talk Burst from User X" is received at approximately the same time as the "Talk Burst Confirm" arrives at Client A then the extent of this reduction is as follows.

$$T_{\text{ptt-play}} \approx T_{\text{send}}$$

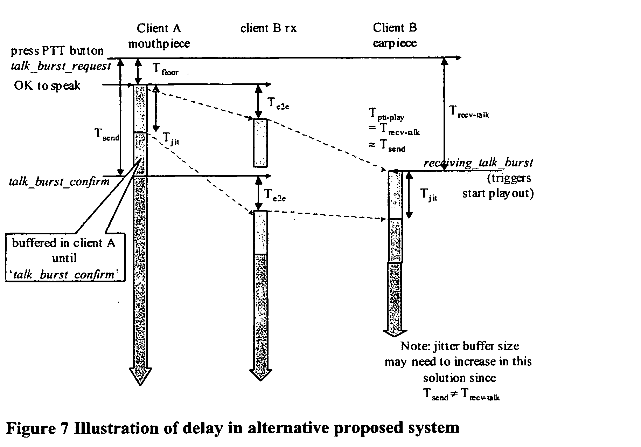

This is illustrated in Figure 7.

## Second Enhancement

In the PoC system the total delay is made up of two key components:

○ Right to Speak delay: Delay between the user pressing the talk button and being granted the floor.
○ Mouth to Ear delay: Delay between the speech being recorded at the talking client until it is played out at the receiver.

The enhanced predictive grant mechanisms described above reduce both the total end-to-end delay and the right to speak delay but increase the mouth to ear delay over conventional PoC systems (due to the introduction of the client transmit buffer).

In certain situations it may be preferable that whilst maintaining the overall end-to-end delay an increased right to speak delay is introduced in return for a lower mouth to ear delay. Effectively the received speech is less 'stale' when played out at the receiver.

In this second alternative, this can be achieved by the talking client determining the time to indicate 'Ok to speak' to the user, based on the requested length of the limited initial segment and historical measurements of delay from floor request to floor grant.

In one embodiment, to simultaneously minimize $T_{ptt-play}$ and to ensure that the speech is as 'fresh' as possible when it arrives at the listener, the Ok to Speak indication should ideally be sent at $T_{floor} - Te_{2e} - T_{jit}$ and at this point $T_{jit}$ amount of data should be collected and sent as before. In this scenario the end to end delay remains at $T_{floor}$ approximately. The advantage of this method is that the information received by client B is less stale than that used previously.

In one embodiment the receiving client can start to play out the speech immediately upon receipt without further delay, subject to a sufficient amount being received to allow for delay jitter.

## References

Ref 1: Push to talk over Cellular (PoC) - Architecture Candidate Version 1.0 - 27 Jan 2006, Open Mobile Alliance

Ref 2: http://www.incodewireless.com/media/whitepapers/2004/PoC_White_Paper-Feb_2004.pdf. (www.nordstream.se)

Ref 3: Measuring internet telephony quality: where are we today: O Hagsand, J Hanson, I Marsh, Globecomm'99.

[END OF DOCUMENT]

Ref 4: An Empirical Study of RealVideo Performance Across the Internet, Yubing Wang, Mark Claypool, Zheng Zuo, ACM SIGCOMM Internet Measurement Workshop 2001

Ref 5: Assessing the Quality of Voice Communications Over Internet Backbones, Markopoulou, Tobagi, Karam, 2003, IEEE ACM Trans Networking.

Ref 6: Design of Push to Talk Client for Performance Measurement, Tuuka Karvonen, Thesis, 3.2.05 Celtius Oy

## Claims

1. A push to talk cellular communication method operable on a mobile communication network to connect mobile communication devices as clients, in which:

   - a client requests the right to 'talk'
   - the right to 'talk' is granted by a central controlling function
   - a confirmation is sent from the central controlling function to the client

   in which:

   the confirmation from the central controlling function is anticipated, and the talking client transmits an initial segment of speech or media information in advance of the confirmation, the initial segment of speech or media is stored in a listening client, the talking client starts to transmit the remainder of the speech or media, on receipt of a confirmation message from the central controlling function, and the listening client starts to play out the speech or media according to a trigger condition,

   **characterized in that**:

   an initial segment of speech or media of limited duration is sent by the talking client, data frames containing speech or media may be marked with a "predictive/confirmed floor grant flag" by the talking client such that data frames transmitted before the talking client receives a message to confirm floor grant are marked as "predictive" and data frames transmitted after this are marked as unconfirmed".

2. A method as claimed in claim 1, in which the trigger for the listening client is the receipt of a portion of speech or media marked as "confirmed".

3. A method as claimed in claim 1, in which the listening client is triggered when it receives a message notifying it that another client is granted the right to send data frames and it has received some frames marked as predictive.

4. A method as claimed in claim 1, 2 or 3 in which the duration of the initial segment of speech or media is limited on the basis of information provided by a push to talk server.

5. A method as claimed in claims 3 and 4 in which the listening client is not triggered until it has received the whole of said initial segment of speech or media.

6. A method as claimed in claim 4 or 5 in which the duration is based on the prevailing delay jitter present in the network.

7. A method as claimed in claim 6 in which the push to talk server notifies the talking client of the delay jitter and the talking client uses this to determine the duration of the initial segment of speech or media.

8. A method as claimed in any preceding claim in which a signal is transmitted by the talking client to the user of the talking client to permit the user to send data and the sending of the signal is delayed on the basis of historical measurements of delay between the user pressing the talk button and being granted the floor and the requested length of the limited initial segment.

9. A mobile communication device for use as a client in a push to talk cellular communication system , the device comprising:

    means adapted to generate a signal requesting the right to "talk"
    means adapted to receive and respond to a message from a central controlling function confirming that the right to "talk" has been granted and
    means adapted to transmit an initial segment of speech or media information in advance of receiving the confirming message
    **characterised by** means adapted to mark data frames containing speech or media with a "predictive/confirmed floor grant flag" such that data frames transmitted before receipt of a message to confirm floor grant are marked as "predictive" and data frames transmitted after this are marked as "confirmed".

10. A device as claimed in claim 9 having means adapted to operate in listening mode in which received frames marked as predictive are buffered before being played to the user.

11. A device as claimed in claim 10 in which the playing of received frames is adapted to be triggered by the receipt of a portion of speech or media marked as "confirmed".

12. A device as claimed in claim 10 in which the playing of received frames is adapted to be triggered by the receipt of a message notifying it that another client is granted the right to send data frames and it has received some frames marked as predictive.

13. A device as claimed in any of claims 9 to 11 having means adapted to limit the duration of the initial segment on the basis of information supplied by a push to talk server.

**Patentansprüche**

1. Push- To- Talk- Over- Cellular- Kommunikationsverfahren, das in einem Mobilkommunikationsnetz anwendbar ist, um mobile Kommunikationsvorrichtungen als Clients zu verbinden, bei dem:

    - ein Client die Berechtigung zu "sprechen" anfragt,
    - die Berechtigung zu "sprechen" von einer zentralen Steuerfunktion gewährt wird und
    - eine Bestätigung von der zentralen Steuerfunktion zu dem Client gesendet wird,

    wobei:

    die Bestätigung von der zentralen Steuerfunktion antizipiert wird und der sprechende Client ein Anfangssegment von Sprache oder Medieninformationen vor der Bestätigung sendet,
    das Anfangssegment der Sprache oder der Medien bei einem hörenden Client gespeichert wird,
    der sprechende Client beginnt, den Rest der Sprache oder der Medien bei Empfang einer Bestätigungsnachricht von der zentralen Steuerfunktion zu senden, und
    der hörende Client beginnt, die Sprache oder die Medien in Übereinstimmung mit einer Auslösebedingung wiederzugeben,

    **dadurch gekennzeichnet, dass**:

    ein Anfangssegment von Sprache oder Medien beschränkter Dauer von dem sprechenden Client gesendet wird, Daten-Frames, die Sprache oder Medien enthalten, mit einem "prädiktiven/ bestätigten Bodenzuordnungskennzeichen" durch den sprechenden Client derart markiert werden, dass Daten-Frames, die gesendet werden, bevor der sprechende Client eine Nachricht zur Bestätigung der Bodenzuordnung empfängt, als "prädiktiv" markiert werden und Daten-Frames, die nach diesem Ereignis gesendet werden, als "bestätigt" markiert werden.

2. Verfahren nach Anspruch 1, bei dem der Auslöser für den hörenden Client der Empfang eines Abschnittes von Sprache oder Medien ist, der als "bestätigt" markiert ist.

3. Verfahren nach Anspruch 1, bei dem der hörende Client ausgelöst wird, wenn er eine Nachricht empfängt, die ihn unterrichtet, das einem weiteren Client die Berechtigung gewährt ist, Daten-Frames zu senden, und er einige Frames empfangen hat, die als prädiktiv markiert sind.

**4.** Verfahren nach Anspruch 1, 2 oder 3, bei dem die Dauer des Anfangssegmentes der Sprache oder der Medien auf der Basis von Informationen beschränkt wird, die von einem Push-To-Talk-Server bereitgestellt werden.

**5.** Verfahren nach Anspruch 3 und 4, bei dem der hörende Client nicht ausgelöst wird, solange er nicht das gesamte Anfangssegment der Sprache oder Medien empfangen hat.

**6.** Verfahren nach Anspruch 4 oder 5, bei dem die Dauer auf dem herrschenden Verzögerungs-Jitter basiert, der in dem Netz vorhanden ist.

**7.** Verfahren nach Anspruch 6, bei dem der Push-To-Talk-Server den sprechenden Client von dem Verzögerungs-Jitter in Kenntnis setzt und der sprechende Client diese Information verwendet, um die Dauer des Anfangssegmentes von Sprache oder Medien zu bestimmen.

**8.** Verfahren nach einem der vorhergehenden Ansprüche, bei dem ein Signal von dem sprechenden Client zu dem Benutzer des sprechenden Clients gesendet wird, um es dem Benutzer zu gestatten, Daten zu senden, und das Senden des Signals auf der Basis vergangener Messungen der Verzögerung zwischen dem Drücken der Sprechtaste durch den Benutzer und dessen Bodenzuordnung sowie der angefragten Länge des begrenzten Anfangssegmentes verzögert wird.

**9.** Mobile Kommunikationsvorrichtung für die Verwendung als Client in einem Push-To-Talk-Over-Cellular-Kommunikationssystem, wobei die Vorrichtung enthält:

eine Einrichtung, die dazu eingerichtet ist, ein Signal zu erzeugen, das die Berechtigung zu "sprechen" anfragt,
eine Einrichtung, die dazu eingerichtet ist, eine Nachricht von einer zentralen Steuerfunktion, die bestätigt, dass die Berechtigung zu "sprechen" gewährt wurde, zu empfangen und auf diese zu antworten, und
eine Einrichtung, die dazu eingerichtet ist, ein Anfangssegment von Sprach- oder Medieninformationen vor dem Empfangen der Bestätigungsnachricht zu senden,
**gekennzeichnet durch** eine Einrichtung, die dazu eingerichtet ist, Daten-Frames, die Sprache oder Medien enthalten, mit einem "prädiktiven/bestätigten Bodenzuordnungskennzeichen" derart zu markieren, dass Daten-Frames, die vor dem Empfang einer Nachricht zur Bestätigung der Bodenzuordnung gesendet werden, als "prädiktiv" markiert werden und Daten-Frames, die nach diesem Ereignis gesendet werden, als "bestätigt" markiert werden.

**10.** Vorrichtung nach Anspruch 9, die über eine Einrichtung verfügt, die dazu eingerichtet ist, in einer Hörbetriebsart zu arbeiten, in der empfangene Frames, die als prädiktiv markiert sind, gepuffert werden, bevor sie dem Benutzer wiedergegeben werden.

**11.** Vorrichtung nach Anspruch 10, bei der die Wiedergabe der empfangenen Frames dazu eingerichtet ist, durch den Empfang eines Abschnittes von Sprache oder Medien ausgelöst zu werden, der als "bestätigt" markiert ist.

**12.** Vorrichtung nach Anspruch 10, bei der die Wiedergabe der empfangenen Frames dazu eingerichtet ist, durch den Empfang einer Nachricht ausgelöst zu werden, die darüber Auskunft gibt, dass einem weiteren Client die Berechtigung gewährt ist, Daten-Frames zu senden, und er einige Frames empfangen hat, die als prädiktiv markiert sind.

**13.** Vorrichtung nach einem der Ansprüche 9 bis 11, die über eine Einrichtung verfügt, die dazu eingerichtet ist, die Dauer des Anfangssegmentes auf der Basis von Informationen zu beschränken, die von einem Push-To-Talk-Server zugeführt werden.

**Revendications**

**1.** Procédé de communication cellulaire par pression sur un bouton utilisable sur un réseau de communication mobile pour connecter des dispositifs de communication mobiles sous la forme de clients, dans lequel :

- un client demande le droit de "parler",
- le droit de "parler" est accordé par une fonction de commande centrale,
- une confirmation est envoyée au client par la fonction de commande centrale,

dans lequel:

la confirmation par la fonction de commande centrale est anticipée, et le client émetteur transmet un segment initial d'informations vocales ou multimédia avant la confirmation,
le segment initial d'informations vocales ou multimédia est stocké dans un client receveur,
le client émetteur commence à transmettre le restant des informations vocales ou multimédia lorsqu'il reçoit un message de confirmation en provenance de la fonction de commande centrale, et
le client receveur commence à lire les informations vocales ou multimédia en fonction d'une condition de déclenchement,

**caractérisé en ce que** :

un segment initial d'informations vocales ou multimédia d'une durée limitée est envoyé par le client émetteur,
les trames de données contenant des informations vocales ou multimédia peuvent être marquées d'un "drapeau d'accord de prise de parole prédictif/confirmé" par le client émetteur, de telle sorte que les trames de données émises avant que le client émetteur reçoive un message de confirmation de l'accord de prise parole soient marquées comme étant "prédictives" et que les trames de données émises après soit marquées comme étant "confirmées".

2. Procédé selon la revendication 1, dans lequel le déclencheur pour le client receveur est la réception d'une partie d'informations vocales ou multimédia marquée comme étant "confirmée".

3. Procédé selon la revendication 1, dans lequel le client receveur est déclenché lorsqu'il reçoit un message l'informant qu'un autre client s'est vu accorder le droit d'envoyer des trames de données et qu'il a reçu certaines trames marquées comme étant "prédictives".

4. Procédé selon la revendication 1, 2 ou 3, dans lequel la durée du segment initial d'informations vocales ou multimédia est limitée sur la base d'informations fournies par le serveur de communication par pression sur un bouton.

5. Procédé selon les revendications 3 et 4, dans lequel le client receveur n'est pas déclenché tant qu'il n'a pas reçu la totalité dudit segment initial d'informations vocales ou multimédia.

6. Procédé selon la revendication 4 ou 5, dans lequel la durée est basée sur la gigue de délai courante présente dans le réseau.

7. Procédé selon la revendication 6, dans lequel le serveur de communication par pression sur un bouton informe le client émetteur de la gigue de délai et le client émetteur utilise cette information pour déterminer la durée du segment initial d'informations vocales ou multimédia.

8. Procédé selon l'une quelconque des revendications précédentes, dans lequel un signal est transmis par le client émetteur à l'utilisateur du client émetteur pour permettre à l'utilisateur d'envoyer des données, et l'envoi du signal est retardé sur la base de mesures historiques du délai entre le moment où l'utilisateur presse le bouton de conversation et le moment où la prise de parole lui est accordée et de la longueur requise pour le segment initial limité.

9. Dispositif de communication mobile à utiliser en tant que client dans un système de communication cellulaire par pression sur un bouton, le dispositif comprenant :

des moyens adaptés pour générer un signal demandant le droit de "parler",
des moyens adaptés pour recevoir un message d'une fonction de commande centrale confirmant que le droit de "parler" a été accordé, et pour répondre à ce message, et
des moyens adaptés pour transmettre un segment initial d'informations vocales ou multimédia avant la réception du message de confirmation,
**caractérisé par** des moyens adaptés pour marquer des trames de données contenant des informations vocales ou multimédia d'un "drapeau d'accord de prise de parole prédictif/confirmé", de telle sorte que les trames de données émises avant la réception d'un message de confirmation de l'accord de prise de parole soient marquées comme étant "prédictives" et que les trames de données émises après soit marquées comme étant "confirmées".

10. Dispositif selon la revendication 9, ayant des moyens adaptés pour fonctionner en mode écoute dans lequel les trames reçues marquées comme étant "prédictives" sont mises en mémoire tampon avant d'être lues à l'utilisateur.

11. Dispositif selon la revendication 10, dans lequel la lecture des trames reçues est adaptée pour être déclenchée par la réception d'une partie d'informations vocales ou multimédia marquée comme étant "confirmée".

12. Dispositif selon la revendication 10, dans lequel la lecture des trames reçues est adaptée pour être déclenchée par la réception d'un message informant qu'un autre client s'est vu accorder le droit d'envoyer des trames de données et le fait qu'il a reçu certaines trames marquées comme étant "prédictives".

13. Dispositif selon l'une quelconque des revendications 9 à 11, ayant des moyens adaptés pour limiter la durée du segment initial sur la base d'informations fournies par le serveur de communication par pression sur un bouton.

**Figure 1: Example of a PoC 1-to-many Group Session (voice transmission) [ref 1]**

**Figure 2: Relationship between Controlling PoC Function, Participating PoC Functions and the PoC Clients**

**Figure 3 Illustration of delay in legacy system**

**Figure 4 Example of Delay spike, frequently occuring on an internet provider's link**

(c)

Figure 5 Example of cluster of jitter events, occuring about once per minute

**Figure 6 Illustration of delay in proposed system**

**Figure 7 Illustration of delay in alternative proposed system**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1505844 A
- EP 1523200 A
- EP 1612957 A
- US 2003153341 A1